(19)

Europäisches Patentamt
European Patent Office
Office européen des brevets

(11) **EP 2 104 693 B1**

(12) **EUROPEAN PATENT SPECIFICATION**

(45) Date of publication and mention
of the grant of the patent:
**08.08.2012 Bulletin 2012/32**

(21) Application number: **07860715.7**

(22) Date of filing: **28.12.2007**

(51) Int Cl.:
**C08F 279/02** (2006.01)    **C08F 265/06** (2006.01)
**C08L 33/12** (2006.01)    **C08L 51/04** (2006.01)

(86) International application number:
**PCT/KR2007/006925**

(87) International publication number:
**WO 2008/082173 (10.07.2008 Gazette 2008/28)**

(54) **IMPACT MODIFIER, METHOD FOR PREPARING THE SAME AND SCRATCH RESISTANT METHACRYLATE RESIN COMPOSITION USING THE SAME**

SCHLAGZÄHIGKEITSVERBESSERER, HERSTELLUNGSVERFAHREN DAFÜR UND KRATZFESTE METHACRYLATHARZZUSAMMENSETZUNG DAMIT

AGENT ANTICHOC, PROCÉDÉ DE PRÉPARATION DUDIT AGENT ANTICHOC ET COMPOSITION DE RÉSINE DE MÉTHACRYLATE RÉSISTANT AUX RAYURES L'UTILISANT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 KR 20060137126**

(43) Date of publication of application:
**30.09.2009 Bulletin 2009/40**

(73) Proprietor: **CHEIL INDUSTRIES INC.**
**Gyeongsangbuk-do 730-710 (KR)**

(72) Inventors:
 • **CHANG, Ki Bo**
 **Yeosu-si**
 **Jeollanam-do 555-713 (KR)**
 • **HA, Doo Han**
 **Yeosu-si**
 **Jeollanam-do 555-803 (KR)**

 • **JUNG, Dong Wook**
 **Yeosu-si**
 **Jeollanam-do 555-803 (KR)**
 • **JUNG, Jae Hun**
 **Gyeonggi-do 437-711 (KR)**

(74) Representative: **Bublak, Wolfgang**
 **Bardehle Pagenberg**
 **Prinzregentenplatz 7**
 **81675 München (DE)**

(56) References cited:
 **US-A- 4 419 471**    **US-A- 4 443 585**
 **US-A- 4 567 234**    **US-A- 4 908 414**
 **US-A- 5 242 982**

 • **LANDIER C. ET AL.: 'Synthesis of Core/Shell Latexes in a Continuous Stirred Tank Reactor' INDUSTRIAL & ENGINEERING CHEMISTRY RESEARCH vol. 43, no. 3, February 2004, pages 700 - 707, XP008112773**

## Description

### Technical Field

The present invention relates to an impact modifier capable of improving impact resistance while maintaining transparency and scratch resistance, a method for preparing the same, and a scratch resistant methacrylate-based resin composition using the same. More particularly, the present invention relates to a scratch resistant resin impact modifier capable of improving impact resistance while maintaining transparency and scratch resistance, a method for preparing the same, and a scratch resistant methacrylate-based resin composition using the same.

### Background Art

In general, methacrylate-based resins have sufficient stiffness, high transmittance and excellent scratch resistance resulting from superior stiffness. Due to such characteristics, methacrylate-based resins are used in various fields. Injection molded articles of methacrylate-based resins are used as rear lamp assemblies for automobiles, instrument panel covers for automobiles, eyeglass lenses, or the like, and extruded articles of methacrylate-based resins are used as signboards and various sheet products.

However, such methacrylate-based resins have a problem in that mechanical properties, particularly, impact resistance, are deteriorated. It is hard to use methacrylate-based resins as resins for housings requiring impact resistance due to the deterioration of the mechanical properties, particularly, impact resistance.

Furthermore, although methacrylate-based resins have excellent surface scratch resistance resulting from superior stiffness, methacrylate-based resins have a problem in that rubbing resistance is deteriorated since fine scratches are generated on the surface of methacrylate-based resins by repeated rubbing with soft cotton or a kind of towel due to the superior stiffness of methacrylate-based resins.

Although surface characteristics and impact resistance of methacrylate-based resins can be partially improved by introducing a soft impact modifier into methacrylate-based resins in order to improve impact resistance and rubbing resistance, the transparency of methacrylate-based resins is rapidly lowered relatively when a soft impact modifier is introduced into methacrylate-based resins.

Some impact modifiers that partially prevent transparency from being lowered and can improve impact resistance have been developed, but the impact modifiers have a low improvement degree of impact resistance.

Therefore, the present inventors have developed an impact modifier having excellent surface characteristics while improving transparency and impact resistance by adding an antioxidant when an impact modifier is polymerized, and a method for preparing the impact modifier.

### Disclosure of Invention

### Technical Problem

An object of the present invention is to provide an impact modifier capable of improving impact strength.

Another object of the present invention is to provide an impact modifier that can improve rubbing resistance and scratch resistance.

A further object of the present invention is to provide an impact modifier that can improve impact strength without deteriorating transparency.

A still further object of the present invention is to provide an impact modifier capable of improving the balance of physical properties such as flowability, yellow index, impact strength, scratch resistance and the like.

A still further object of the present invention is to provide a method for preparing an impact modifier with excellent reaction stability.

A still further object of the present invention is to provide a method for preparing an impact modifier which does not deteriorate transmittance and mechanical properties.

A still further object of the present invention is to provide a methacrylate-based resin composition having excellent impact resistance, scratch resistance, transparency and appearance by employing the aforementioned impact modifier.

Other objects and advantages of this invention will be apparent from the ensuing disclosure and appended claims.

### Technical Solution

One aspect of the invention provides an impact modifier formed by graft polymerizing 45 to 70 % by weight of a rubber polymer with 30 to 55 % by weight of a methacrylate-based monomer, wherein the rubber polymer is prepared by polymeiizing 0.1 to 1 part by weight of an antioxidant with 100 parts by weight of a monomer mixture comprising 30 to 45 % by weight of a diene - based monomer and 55 to 70 % by weight of alkyl acrylate.

In exemplary embodiments of the invention, the methacrylate-based monomer is alkyl methacrylate having 1 to 10 carbon atoms.

In embodiments, the alkyl acrylate is alkyl acrylate having 1 to 10 carbon atoms.

The antioxidant may be octadecyl 3-(3,5-di-tert-butyl-4-hydroxyphenyl)propionate, triethylene glycol-bis-3(3-tert-butyl-4-hydroxy-5-methylphenyl)propionate, 2,6-di-tert-butyl-4-methylphenol, 2,2'-methylene-bis-(4-methyl-6-tert-butylphenol), tri(2,4-di-tert-butylphenyl)phosphate, 1,3,5-tri(3,5-di-tert-butyl-4-hydroxyphenyl)isocyanate, distearyl-thio-dipropionate, laurylthio propionate methane, di-phenyl-isooctyl phosphite, or mixtures thereof.

Another aspect of the invention provides a method for preparing the foregoing impact modifier. The method comprises the steps of: polymerizing a monomer mixture comprising a diene-based monomer and alkyl acrylate in the presence of an antioxidant to prepare a rubber polymer with a particle diameter of 150 to 250 nm; and adding a methacrylate-based monomer into the rubber polymer to graft polymerize the methacrylate-based monomer with the rubber polymer.

In exemplary embodiments of the invention, the monomer mixture comprises 30 to 45 % by weight of the diene-based monomer and 55 to 70 % by weight of the alkyl acrylate.

In one embodiment, the alkyl acrylate is alkyl acrylate having 1 to 10 carbon atoms.

In one embodiment, the methacrylate-based monomer is alkyl methacrylate having 1 to 10 carbon atoms.

In exemplary embodiments of the invention, the monomer mixture may be polymerized using a cross-linking agent and a molecular weight controlling agent.

The cross-linking agent may be triallyl isocyanurate, allyl methacrylate, or a mixture thereof. The cross-linking agent may be used in an amount of 0.5 to 1 part by weight, per 100 parts by weight of the monomer mixture.

The antioxidant may be octadecyl 3-(3,5-di-tert-butyl-4-hydroxyphenyl)propionate or triethylene glycol-bis-3(3-tert-butyl-4-hydroxy-5-methylphenyl)propionate, 2,6-di-tert-butyl-4-methylphenol, 2,2'-methylene-bis-(4-methyl-6-tert-butylphenol), tri(2,4-di-tert-butylphenyl)phosphate, n-octadecyl-3(3,5-di-tert-butyl-4-hydroxyphenyl)propionate, 1,3,5-tri(3,5-di-tert-butyl-4-hydroxyphenyl)isocyanate, 3-(3,5-di-tert-butyl-4-hydroxyphenyl), distearyl-thio-dipropionate, laurylthio propionate methane, di-phenyl-isooctyl phosphite, or mixtures thereof. The antioxidant may be used in an amount of 0.1 to 1 part by weight of the antioxidant, per 100 parts by weight of the monomer mixture.

In embodiments, the methacrylate-based monomer may be introduced when a conversion ratio of the rubber polymer is 70 to 98 %.

Another aspect of the invention provides a methacrylate-based resin composition comprising the foregoing impact modifier. The methacrylate-based resin composition comprises 55 to 95 % by weight of a methacrylate-based resin and 5 to 45 % by weight of an impact modifier.

Another aspect of the invention provides a molded article using the resin composition.

The molded article may be prepared by molding the methacrylate-based resin composition of the present invention, wherein the molded article has an Izod notched impact strength of 4.5 kgf·cm/cm or more at a thickness of 1/4" according to ASTM D256, a yellow index of 1.7 or less according to ASTM D1925, a pencil hardness of 1H or more at a load of 500 g and a temperature of 23 ˚C according to JIS K5401, a total light transmittance of 92 % or more and a haze of 0.9 % or less respectively measured by a color computer manufactured by Suga Instrument Corporation.

**Best Mode for Carrying Out the Invention**

An impact modifier of the present invention is formed by graft polymerizing 45 to 70 % by weight of a rubber polymer with 30 to 55 % by weight of a methacrylate-based monomer, wherein the rubber polymer is prepared by polymerizing 0.1 to 1. part by weight of an antioxidant with 100 parts by weight of a monomer mixture comprising 30 to 45 % by weight of a diene-based monomer and 55 to 70 % by weight of alkyl acrylate.

The monomer used in the preparation of the rubber polymer may have a low glass transition temperature such that the monomer can exhibit rubber characteristics, and a composition of the monomer may be controlled to maintain the same refractive index as that of a methacrylate-based resin. For instance, it is preferable to control a refractive index to be within a range of a refractive index of a poly(methyl methacrylate) resin of 1.49 ±0.005.

A monomer having a low glass transition temperature can be used as the diene-based monomer, and preferably a monomer having a glass transition temperature of 70˚C or less may be used. Examples of the diene-based monomer may include 1,3-butadiene, 2-methyl-1,3-butadiene, 2,3-methyl-1,3-butadiene, 1,3-pentadiene, 1,3-hexadiene and mixtures thereof. Preferably butadiene may be used as the diene-based monomer.

The alkyl acrylate may be an alkyl acrylate having 1 to 10 carbon atoms. Specific examples of the alkyl acrylate may include octyl acrylate, methyl acrylate, ethyl acrylate, butyl acrylate, or the like. Preferably, butyl acrylate that is inexpensive is used as the alkyl acrylate.

An alkyl methacrylate having 1 to 10 carbon atoms may be used as the methacrylate-based monomer. Examples of the methacrylate-based monomer may include methyl methacrylate, ethyl methyl methacrylate, propyl methyl methacrylate, butyl methyl methacrylate, hexyl methyl methacrylate, 2-ethylhexyl methyl methacrylate, octyl methyl methacrylate, or mixtures thereof. Preferably, the methyl methacrylate is used as the methacrylate-based monomer.

In addition, an antioxidant may be used during the preparation of the rubber polymer in the present invention in order to prevent oxidation of a copolymer rubber and lower yellow index of the copolymer rubber. It is preferable to use secondary antioxidants such as a thiol-based antioxidant and a phosphorous-based antioxidant. Examples of the antioxidant may include octadecyl 3-(3,5-di-tert-butyl-4-hydroxyphenyl)propionate, triethylene glycol-bis-3(3-tert-butyl-4-hydroxy-5-methylphenyl)propionate, 2,6-di-tert-butyl-4-methylphenol, 2,2'-methylene-bis-(4-methyl-6-tert-butylphenol), tri(2,4-di-tert-butylphenyl)phosphate, 1,3,5-tri(3,5-di-tert-butyl-4-hydroxyphenyl)isocyanate, distearyl-thio-dipropionate, laurylthio propionate methane, di-phenyl-isooctyl phosphite, or mixtures thereof. These antioxidants can be used alone or in combination with one another.

It is preferable that the antioxidant is used in an amount of 0.1 to 1 part by weight, per 100 parts by weight of the monomer mixture. In a case where the antioxidant of the present invention is used in the aforementioned range, an antioxidation effect resulting from butadiene can be obtained, and polymerization can proceed smoothly without deterioration in the polymerization reaction.

The rubber polymer may be prepared by polymerizing 30 to 45 % by weight of a diene-based monomer and 55 to 70 % by weight of an alkyl acrylate in the presence of an antioxidant. In case of the polymerization in the aforementioned ratio, a refractive index difference between the rubber polymer and a methacrylate-based resin can be minimized, and a final resin composition can maintain superior transparency. More preferably, the rubber polymer is prepared by polymerizing 35 to 43 % by weight of the diene-based monomer and 57 to 65 % by weight of the alkyl acrylate in the presence of the antioxidant.

The rubber polymer of the present invention may have an average particle diameter range of 150 to 250 nm, preferably 170 to 230 nm, more preferably 175 to 220 nm. In a case where the rubber polymer has such a range, the rubber polymer can obtain a preferable effect with respect to impact resistance and transparency.

An impact modifier of the present invention can be prepared by graft polymerizing a methacrylate-based monomer with the rubber polymer.

45 to 70 % by weight of the rubber polymer is mixed with 30 to 55 % by weight of the methacrylate-based monomer in the graft polymerization. In a case where the aforementioned mixing ratio is used, the obtained impact modifier can be excellent in production efficiency, graft polymerization efficiency, and impact resistance. Furthermore, since a uniform graft polymerization can be performed, the impact modifier can be uniformly dispersed after performing an extrusion or an injection molding process. Preferably, 47 to 65 % by weight of the rubber polymer is mixed with 35 to 53 % by weight of the methacrylate-based monomer in the graft polymerization. More preferably, 49 to 63 % by weight of the rubber polymer is mixed with 37 to 51 % by weight of the methacrylate-based monomer.

The impact modifier according to the present invention can be prepared by the following method.

First, a rubber polymer for improving impact resistance is prepared, and then an impact modifier can be prepared by performing a graft polymerization using a methyl methacrylate monomer to provide compatibility of the rubber polymer with a methacrylate-based resin.

In one embodiment of the present invention, the impact modifier may be prepared by polymerizing a monomer mixture comprising a diene-based monomer and an alkyl acrylate in the presence of an antioxidant to prepare a rubber polymer with a particle diameter of 150 to 250 nm, and adding a methacrylate-based monomer into the rubber polymer to graft-polymerize them.

As mentioned above, the diene-based monomer and the alkyl acrylate with low glass transition temperatures are selected such that the diene-based monomer and the alkyl acrylate can exhibit rubber characteristics, and specific examples of the diene-based monomer and the alkyl acrylate are the same as the aforementioned examples.

The monomer mixture comprises 30 to 45 % by weight of the diene-based monomer and 55 to 70 % by weight of the alkyl acrylate such that a refractive index is maintained within a range of a refractive index of a poly(methyl methacrylate) resin of 1.49 $\pm$0.005.

The monomer mixture can be polymerized in the presence of additives such as a cross-linking agent, a molecular weight controlling agent, an emulsifier, an electrolyte, and the like.

In exemplary embodiments of the invention, the rubber polymer can be prepared in an emulsion polymerization by adding a cross-linking agent, a molecular weight controlling agent and an emulsifier to a monomer mixture comprising a diene-based monomer and an alkyl acrylate in the presence of an antioxidant.

In another embodiment of the present invention, the rubber polymer can be prepared in an emulsion polymerization by adding a cross-linking agent, a molecular weight controlling agent, an emulsifier and an electrolyte to a monomer mixture comprising a diene-based monomer and an alkyl acrylate in the presence of an antioxidant.

In another embodiment of the present invention, the rubber polymer can be prepared by adding a cross-linking agent, a molecular weight controlling agent, an emulsifier and an electrolyte to a monomer mixture comprising a diene-based monomer and an alkyl acrylate in the presence of an antioxidant, heating the reaction temperature to 50~80 ˚C, preferably 60~75 ˚C, and introducing an initiator thereinto to initiate an emulsion polymerization.

Triallyl isocyanate (TAIC), allyl methacrylate (AMA) or a mixture thereof may be used as the cross-linking agent. It is preferable to use 0.5 to 1 part by weight of the cross-linking agent with respect to 100 parts by weight of the monomer mixture. When the cross-linking agent is used in such a range, an optimal effect can be obtained with regard to transmittance and impact resistance.

The molecular weight controlling agent may include alkyl mercaptanes in the form of $CH_3(CH_2)_nSH$ such as n-butyl mercaptane, n-octyl mercaptane, n-dodectl mercaptane, tertiary dodecyl mercaptane, isopropyl mercaptane and n-amyl mercaptane, and aromatic compounds such as alpha methyl styrene dimers, alpha ethyl styrene dimers and halogen compounds including carbon tetra chloride. The n-octyl mercaptane is preferably used as the molecular weight controlling agent.

It is preferable in the present invention that 0.2 to 1 part by weight of the molecular weight controlling agent with respect to 100 parts by weight of the monomer mixture be used. When such a range is used, excellent mechanical properties can be obtained.

Fatty acid-based emulsifiers such as derivatives in which lauric acid, stearic acid, oleic acid, and the like are substituted with sodium or potassium are preferable as the emulsifiers. It is preferable that 1 to 3 parts by weight of the emulsifier with respect to 100 parts by weight of the monomer mixture be used. When the emulsifier is used in such a range, emulsion stability is maintained to prevent the problem of deteriorated impact resistance due to a large particle diameter of 250 nm or greater or a small particle diameter and to prevent the problem of deteriorated transparency due to residual emulsifier.

An electrolyte may be used to improve emulsion stability in the preparation of the rubber polymer. Potassium carbamate is preferably used as the electrolyte, but the electrolyte is not limited thereto. It is preferable to use 1 to 3 parts by weight of the electrolyte with respect to 100 parts by weight of the monomer mixture. When such a range is used, this is preferable with regard to polymerization stability and it is possible to prevent the problem of emulsion stability deterioration caused by macronization of particle diameter and high viscosity of particles.

A water-soluble initiator is used as the initiator used in a rubber polymer of the present invention, and particularly a persulfate-based initiator is preferable. The water-soluble initiator includes sodium persulfate, ammonium persulfate, potassium persulfate, and the like. In the present invention, 0.3 to 1 part by weight of the initiator with respect to 100 parts by weight of the monomer mixture is preferably used. When such a range is used, it is possible to obtain excellent reactivity and prevent the deterioration of physical properties due to a reduction of molecular weight without being affected by a polymerization inhibitor and impurities remaining in the monomer.

In a conventional method for preparing a rubber polymer, a core/shell rubber can be prepared in such a manner that a core is formed using a monomer with a high glass transition temperature, the core is covered with a rubber with a low glass transition temperature, and then a hard core is formed in the rubber. However, a rubber is prepared in the present invention by a polymerization method in which a relatively hard rubber is formed by increasing the degree of cross-linking of a rubber formed in the early reaction stage using a mixture of a cross-linking agent having a relatively fast reactivity and a molecular weight controlling agent and a soft rubber is then formed in the second half of the polymerization process.

The rubber is graft polymerized by a methacrylate-based monomer in order to exhibit compatibility with methacrylate resins.

The graft polymerization is performed by adding a methacrylate-based monomer into the rubber at a time point when a predetermined polymerization ratio has passed during the preparation of a rubber polymer.

It is desirable to inject the methacrylate monomer at a graft polymerization time point at which a copolymer rubber has a conversion rate of 70 % to 98 %, preferably 90 % to 96 %. If the methacrylate monomer is introduced at a graft polymerization time point at which the copolymer rubber has a conversion rate of less than 70 %, impact resistance of a prepared impact modifier can be deteriorated. If the methacrylate monomer is introduced at a graft polymerization time point at which the copolymer rubber has a conversion rate of greater than 98 %, stability of the impact modifier can be deteriorated since a free methacrylate polymer that is not graft polymerized is excessively formed due to a deficient graft polymerization site.

In order to obtain transparency, it is preferable to inject the methacrylate monomer when the rubber has an average particle diameter of 150 to 250 nm.

In the present invention, the predetermined amount of a molecular adjusting agent may be used to adjust the molecular weight of a polymer produced during the graft polymerization.

In a preferred embodiment of the present invention, a mixture of the molecular weight controlling agent and the methacrylate monomer is introduced at a time point at which the rubber has a conversion ratio of 70 % to 98 %.

The molecular weight controlling agent used during the graft polymerization includes the aforementioned molecular weight controlling agent used in the preparation of the rubber. In one embodiment of the present invention, n-octyl mercaptane is used. In the present invention, 0.2 to 1 part by weight of the molecular weight controlling agent with respect to 100 parts by weight of a mixture of a rubber polymer and a methacrylate monomer is preferably used during the graft polymerization. When such a range is used, excellent mechanical properties can be obtained.

The prepared graft polymer is post-treated in an ordinary manner and can be used as an impact modifier. For instance, a final impact modifier can be prepared in the form of powder, particulate, particle, granule, or the like, but the form is not limited thereto.

In one embodiment of the present invention, the prepared graft polymer is formed into a powder impact modifier through a post-treatment process and a dehydrating and drying process using a coagulant.

When an impact modifier according to the present invention is applied to resins, it is possible to improve transparency, scratch resistance and surface characteristics as well as impact resistance of the resins.

In particular, when the impact modifier is applied to methacrylate-based resins, it is possible to obtain an effect of improving transparency and scratch resistance.

The present invention provides a methacrylate-based resin composition to which the impact modifier is applied. The methacrylate-based resin composition comprises 55 to 95 % by weight of a methacrylate-based resin and 5 to 45 % by weight of an impact modifier. The methacrylate-based resin is preferably a poly(methyl methacrylate). The methacrylate-based resin composition may be prepared by blending the impact modifier with a methacrylate-based resin.

The present invention provides a molded article using the resin composition.

The molded article is manufactured by molding a methacrylate-based resin composition of the present invention, wherein the molded article has an Izod notched impact strength of 4.5 kgf·cm/cm or more at a thickness of 1/4" according to ASTM D256, a yellow index of 1.7 or less according to ASTM D1925, a pencil hardness of 1H or more at a load of 500 g and a temperature of 23 ˚C according to JIS K5401, a total light transmittance of 92 % or more and a haze of 0.9 % or less respectively measured by a color computer manufactured by Suga Instrument Corporation.

In one embodiment of the present invention, the molded article has an Izod notched impact strength of 4.5 to 9.0 kgf·cm/cm at a thickness of 1/4" according to ASTM D256, a yellow index of 1.0 to 1.7 according to ASTM D1925, a pencil hardness of 1H to 4H at a load of 500 g and a temperature of 23 ˚C according to JIS K5401, a total light transmittance of 92 % to 98 % and a haze of 0.5 to 0.9 % respectively measured by a color computer manufactured by Suga Instrument Corporation.

The methacrylate-based resin composition of the present invention may further comprise general additives such as flame retardants, lubricants, releasing agents, nucleating agents, antistatic agents, stabilizers and a reinforcing agent according to respective uses in addition to the foregoing components. One of the additives may be used alone or a mixture of at least two thereof may also be used.

The methacrylate-based resin composition of the present invention has excellent impact resistance, scratch resistance, transparency and external appearance. Therefore, the methacrylate-based resin composition of the present invention can replace conventional methyl methacrylate resins and can be used in housings for various electrical and electronic appliances as well. For instance, the methacrylate-based resin composition of the present invention can be used for housings of various electrical and electronic appliances, such as television sets, computers, printers, washing machines, cassette players and audios, as well as rear lamp assemblies, instrument panel covers, eyeglass lenses, signboards and various sheet products.

The invention may be better understood by reference to the following examples which are intended for the purpose of illustration and are not to be construed as in any way limiting the scope of the present invention, which is defined in the claims appended hereto.

**Mode for the Invention**

**EXAMPLES**

**Example 1**

To a high pressure reactor were added 36.3 parts by weight of a butyl acrylate monomer, 132 parts by weight of process water, 0.6 part by weight of a cross-linking agent (TAIC), 0.3 part by weight of a molecular weight controlling agent (n-octyl mercaptane), 2.0 parts by weight of an electrolyte (potassium carbamate), 2.0 parts by weight of an emulsifier (potassium stearate) and 0.6 part by weight of an antioxidant (octadecyl 3-(3,5-di-tert-butyl-4-hydroxyphenyl) propionate), and the reactor was sealed and clamped. After assessing a leak part of the reactor by pressurizing nitrogen into the reactor in order to conduct an air-tightness assessment of the reactor, 23.7 parts by weight of a butadiene monomer was introduced into the reactor. After increasing a temperature of the reactor to 70 ˚C, 0.8 part by weight of an initiator (potassium persulfate) was added into the reactor to initiate the reaction. The temperature of the reactor was maintained at 70 ˚C by using a heat medium and cooling water in a reactor jacket. The polymerization ratio and the particle diameter were measured at a time point when 4 hours were has passed after the initiator was added into the reactor, and the measured polymerization ratio and particle diameter were 94 % and 200 nm respectively. While increasing a temperature of the reactor to 85 °C for one hour, 40 parts by weight of a methyl methacrylate monomer is mixed with 0.5 part by weight of a molecular weight controlling agent (n-octyl mercaptane), and then, the mixture was continuously introduced into the reactor for 30 minutes for a graft polymerization. The reactor was cooled to finish the polymerization after maintaining the temperature of the reactor to 85 °C for about 3 hours after the methyl methacrylate monomer was introduced into the reactor. A composition for the prepared impact modifier contained a rubber comprising 60.5 % by weight of a butyl acrylate monomer and 39.5 % by weight of a butadiene monomer, and comprised 60 % by weight of a rubber polymer and 40 % by weight of a methyl methacrylate monomer.

After analyzing the prepared sample in a latex state, the mixture was agglomerated by slowly adding 100 parts by weight of the analyzed sample into 140 parts by weight of a 1% sulfuric acid solution that was rotated at a rotational speed of 250 rpm and maintained at 67°C. Hard agglomerated particles were formed by increasing a temperature of the agglomerated mixture to 90 °C, the hard agglomerated particles were dehydrated by a centrifuge, and the dehydrated agglomerated particles were dried to a water content of not more than 0.5 % by a fluidized-bed dryer. To 20 parts by weight of the dried sample, 80 parts by weight of PMMA with a weight average molecular weight of 97,000 was added and extruded to prepare a test specimen at an extrusion temperature of 230 °C using an extrusion and injection molding machine. The physical properties of the test specimens were measured, and the results are shown in Table 1.

## Example 2

Example 2 is prepared in the same manner as in Example 1 except that the polymerization ratio, the particle diameter and the methyl methacrylate injecting time were respectively changed to 96 %, 198 nm and 80 minutes by extending a rubber polymer polymerizing time by 1 more hour, i.e., by polymerizing the rubber polymer for 5 hours.

## Example 3

Example 3 is prepared in the same manner as in Example 1 except that the contents of the rubber polymer and the methyl methacrylate monomer were changed to 55 % by weight and 45 % by weight, respectively, and the graft polymerization was performed at a rubber polymer particle diameter of 178 nm.

## Comparative Example 1

Comparative Example 1 is prepared in the same manner as in Example 1 except that the contents of the butadiene monomer and the butyl acrylate monomer were changed to 30 parts by weight and 30 parts by weight, respectively.

## Comparative Example 2

Comparative Example 2 is prepared in the same manner as in Example 1 except that the contents of the rubber polymer and the methyl methacrylate monomer were changed to 80 % by weight and 20 % by weight, respectively, and the graft polymerization was performed at a rubber polymer particle diameter of 251 nm.

## Comparative Example 3

Comparative Example 3 is prepared in the same manner as in Example 1 except that the contents of the rubber polymer and the methyl methacrylate monomer were changed to 50 % by weight and 50 % by weight, respectively, and the graft polymerization was performed at a rubber polymer particle diameter of 142 nm.

## Comparative Example 4

Comparative Example 4 is prepared in the same manner as in Example 1 except that the content of the emulsifier was changed to 0.8 part by weight during the preparation of the rubber polymer, and the graft polymerization was performed at a rubber polymer particle diameter of 332 nm.

## Comparative Example 5

Comparative Example 5 is prepared in the same manner as in Example 1 except that the content of the cross-linking agent was changed to 2.0 parts by weight.

**Comparative Example 6**

Comparative Example 6 is prepared in the same manner as in Example 1 except that the antioxidant was not used.

**Comparative Example 7**

PMMA with a weight average molecular weight of 97,000 solely was extruded to prepare a test specimen at an extrusion temperature of 230˚C using an extrusion and injection molding machine. The physical properties of the test specimens were measured, and the results are shown in Table 1.

The physical properties of the samples that had been prepared in the foregoing Examples and Comparative Examples were evaluated by the following methods, and evaluation results are represented in Table 1.

(1) Conversion ratio: A polymerization degree of the monomer except for a composition of nonvolatile materials was measured after measuring the total solid content of the sample.

- Total solid content

= (weight of sample after drying / weight of sample before drying) × 100

- Conversion ratio

= [(total solid content - nonvolatile material content) × total]/total monomer weight

(2) Particle diameter of rubber: A volume average particle diameter of the rubber was measured using a particle size measuring instrument A380 manufactured by Nicomp Corporation.

(3) Notched izod impact strength (kgf·cm/cm: The notch Izod impact strength was measured at a thickness of 1/4" according to ASTM D256.

(4) Flow index (g/10 min): The melt flow index was measured according to ASTM D1238.

(5) Yellow index: the yellow index was measured according to ASTM D1925.

(6) Pencil hardness: The pencil hardness was measured by applying 500 g load 5 times to a surface of a test sample having a size of 3 mm (thickness) x 10 mm (length) x 6 mm (width) according to JIS (Japanese Industry Standard) K5401 at 23˚C. The surface of the sample is visually checked for scratches. If scratches are observed in two or more, the test is repeated with a pencil of one grade lower hardness. The results were classified into 4B~4H.

(7) Rubbing characteristics: After repeatedly rubbing the sample with a towel 1000 times, a scratch degree on the surface was observed by the naked eye (◎ excellent > ○ good > △ deteriorative > ▲ bad).

(8) Transparency was measured by a color computer measuring instrument manufactured by Suga Instrument Corporation, and its measurement results were represented by a total light transmittance and a haze.

- Total light transmittance (%)

= (light transmitted at all forward angles through a specimen) / (incident light through a specimen) × 100

- Haze (%)

= (diffused transmission light) / (total light transmittance) × 100

Table 1

| | | Examples | | | Comparative Examples | | | | | | |
|---|---|---|---|---|---|---|---|---|---|---|---|
| | | 1 | 2 | 3 | 1 | 2 | 3 | 4 | 5 | 6 | 7 |
| | Butadiene (%) | 39.5 | 39.5 | 39.5 | 50 | 39.5 | 39.5 | 39.5 | 39.5 | 39.5 | - |
| Rubber | Alkyl acrylate (%) | 60.5 | 60.5 | 60.5 | 50 | 60.5 | 60.5 | 60.5 | 60.5 | 60.5 | - |
| Rubber/MMA | | 60/40 | 60/40 | 55/45 | 60/40 | 80/20 | 50/50 | 60/40 | 60/40 | 60/40 | 0/100 |
| Rubber conversion | ratio (%) | 94 | 96 | 95 | 95 | 92 | 98 | 92 | 93 | 96 | - |
| Rubber particle | diameter (nm) | 200 | 198 | 178 | 182 | 251 | 142 | 332 | 179 | 201 | - |
| Izod impact notch) ASTM | strength (1 /4" D256 | 6.0 | 5.9 | 4.9 | 6.2 | 6.1 | 2.1 | 7.6 | 2.3 | 6.0 | 2.1 |
| Flow index | (ASTM D1238) | 4.1 | 4.1 | 4.1 | 3.2 | 2.9 | 3.9 | 1.4 | 3.2 | 4.0 | 4.0 |
| Yellow index | (ASTM D1925) | 1.4 | 1.4 | 1.3 | 16.6 | 8.9 | 1.9 | 2.8 | 2.1 | 7.2 | 0.9 |
| Pencil | hardness | 1H | 1H | 1H | B | F | 1H | F | F | 1H | 2H |
| Rubbing | characteristics | ◎ | ◎ | O | O | △ | ▲ | O | △ | ◎ | ▲ |
| Transparency | Total light transmittance (%) | 92.3 | 92.2 | 92.4 | 72.4 | 82.8 | 92.1 | 80.9 | 90.2 | 92.1 | 92.8 |
| | Haze (%) | 0.9 | 0.9 | 0.8 | 69.0 | 30.8 | 1.0 | 36.0 | 2.1 | 1.1 | 0.6 |

9

As shown in Table 1, it can be observed that Examples 1, 2 and 3 in which the impact modifier is introduced have improved impact resistances and excellent surface scratch resistances without greatly deteriorated transparency and haze characteristics as compared with PMMA of Comparative Example 7 with no impact modifier used. It can be confirmed that Comparative Example 1, in which diene-based monomer and alkyl acrylate ranges deviated from the ranges of the present invention, has deteriorated transparency and yellow index and its scratch resistance also dropped rapidly. It can be seen that Comparative Example 2, in which a rubber to MMA ratio deviated from the range of the present invention, has deteriorated transparency, yellow index and also flowability.

It can be seen that Comparative Example 3 in which an average particle diameter of the rubber polymer deviated from the range of the present invention has deteriorated impact resistance. It can be confirmed that Comparative Example 4 has lowered yellow index and transparency and also deteriorated rubbing characteristics.

It can be observed that Comparative Example 5, in which the cross-linking agent content deviated from the range of the present invention, has lowered impact strength and also deteriorated scratch resistance and transparency. Further, it can be confirmed that Comparative Example 6, in which an anti-oxidant is not used during the polymerization, is not suitable for the present invention since yellow index is high.

## Claims

1. An impact modifier formed by graft polymerizing 45 to 70 % by weight of a rubber polymer with 30 to 55 % by weight of a methacrylate-based monomer, wherein said rubber polymer is prepared by polymerizing 0.1 to 1 part by weight of an antioxidant with 100 parts by weight of a monomer mixture comprising 30 to 45 % by weight of a diene-based monomer and 55 to 70 % by weight of alkyl acrylate.

2. The impact modifier of Claim 1, wherein said methacrylate-based monomer is alkyl methacrylate having 1 to 10 carbon atoms.

3. The impact modifier of Claim 1, wherein said alkyl acrylate is alkyl acrylate having 1 to 10 carbon atoms.

4. The impact modifier of Claim 1, wherein said antioxidant is octadecyl 3-(3,5-di-tert-butyl-4-hydroxyphenyl)propionate, triethylene glycol-bis-3(3-tert-butyl-4-hydroxy-5-methylphenyl)propionate, 2,6-di-tert-butyl-4-methylphenol, 2,2'-methylene-bis-(4-methyl-6-tert-butylphenol), tri(2,4-di-tert-butylphenyl)phosphate, 1,3,5-tri(3,5-di-tert-butyl-4-hydroxyphenyl)isocyanate, distearyl-thio-dipropionate, laurylthio propionate methane, di-phenyl-isooctyl phosphite, or mixtures thereof.

5. A method for preparing an impact modifier comprising:

   polymerizing a monomer mixture comprising a diene-based monomer and alkyl acrylate in the presence of an antioxidant to prepare a rubber polymer with a particle diameter of 150 to 250 nm; and
   adding a methacrylate-based monomer into the rubber polymer to graft polymerize the methacrylate-based monomer with the rubber polymer.

6. The method of Claim 5, wherein said monomer mixture comprises 30 to 45 % by weight of a diene-based monomer and 55 to 70 % by weight of alkyl acrylate.

7. The method of Claim 5, wherein said alkyl acrylate is alkyl acrylate having 1 to 10 carbon atoms.

8. The method of Claim 5, wherein said methacrylate-based monomer is alkyl methacrylate having 1 to 10 carbon atoms.

9. The method of Claim 5, wherein said monomer mixture is polymerized using a cross-linking agent and a molecular weight controlling agent.

10. The method of Claim 9, wherein said cross-linking agent is triallyl isocyanurate, allyl methacrylate, or a mixture thereof and is used in an amount of 0.5 to 1 part by weight, per 100 parts by weight of the monomer mixture.

11. The method of Claim 5, wherein said antioxidant is octadecyl 3-(3,5-di-tert-butyl-4-hydroxyphenyl)propionate or triethylene glycol-bis-3(3-tert-butyl-4-hydroxy-5-methylphenyl)propionate, 2,6-di-tert-butyl-4-methylphenol, 2,2'-methylene-bis-(4-methyl-6-tert-butylphenol), tri(2,4-di-tert-butylphenyl)phosphate, 1,3,5-tri(3,5-di-te rt-butyl-4-hydroxyphenyl)isocyanate, distearyl-thio-dipropionate, laurylthio propionate methane, di-phenyl-isooctyl phosphite, or mixtures thereof and is used in an amount of 0.1 to 1 part by weight, per 100 parts by weight of the monomer mixture.

12. The method of Claim 5, wherein said methacrylate-based monomer is introduced when a conversion ratio of the rubber polymer is 70 to 98 %.

13. A methacrylate-based resin composition comprising the impact modifier as defined in any one of Claims 1-4.

14. The methacrylate-based resin composition of Claim 13, wherein said methacrylate-based resin composition comprises 55 to 95 % by weight of a methacrylate-based resin and 5 to 45 % by weight of an impact modifier.

15. A molded article produced from the resin composition of Claim 14 having an Izod notched impact strength of 4.5 kgf·cm/cm or more at a thickness of 1/4" according to ASTM D256, a yellow index of 1.7 or less according to ASTM D1925, a pencil hardness of 1H or more at a load of 500 g and a temperature of 23°C according to JIS K5401, a total light transmittance of 92 % or more and a haze of 0.9 % or less respectively measured by a color computer manufactured by Suga Instrument Corporation.

**Patentansprüche**

1. Schlagmodifikator, der durch Polymerisieren von 45 bis 70 Gew.-% eines Kautschukpolymers mit 30 bis 55 Gew.-% eines Monomers auf Methacrylatbasis gebildet ist, wobei das Kautschukpolymer durch Polymerisieren von 0,1 bis 1 Gewichtsteilen eines Antioxidationsmittels mit 100 Gewichtsteilen eines 30 bis 45 Gew.-% eines Monomers auf Dienbasis und 55 bis 70 Gew.-% Alkylacrylat umfassenden Monomergemischs hergestellt wird.

2. Schlagmodifikator nach Anspruch 1, wobei das Monomer auf Methacrylatbasis Alkylmethacrylat mit 1 bis 10 Kohlenstoffatomen ist.

3. Schlagmodifikator nach Anspruch 1, wobei das Alkylacrylat Alkylacrylat mit 1 bis 10 Kohlenstoffatomen ist.

4. Schlagmodifikator nach Anspruch 1, wobei das Antioxidationsmittel Octadecyl-3-(3,5-di-tert-butyl-4-hydroxyphenyl) propionat, Triethylenglycolbis-3(3-tert-butyl-4-hydroxy-5-methylphenyl)propionat, 2,6-Di-tert-butyl-methylphenol, 2,2'-Methylenbis(4-methyl-6-tert-butylphenol), Tri(2,4-di-tert-butylphenyl)phosphat, 1,3,5-Tri(3,5-di-tert-butyl-4-hydroxyphenyl)isocyanat, Distearylthiodipropionat, Laurylthiopropionatmethan, Diphenylisooctylphosphit oder Gemische davon ist.

5. Verfahren zur Herstellung eines Schlagmodifikators, umfassend:

   Polymerisieren eines ein Monomer auf Dienbasis und Alkylacrylat umfassenden Monomergemischs in der Gegenwart eines Antioxidationsmittels zur Herstellung eines Kautschukpolymers mit einem Teilchendurchmesser von 150 bis 250 nm; und
   Zugabe eines Monomers auf Methacrylatbasis zu dem Kautschukpolymer zum Pfropfpolymerisieren des Monomers auf Methacrylatbasis mit dem Kautschukpolymer.

6. Verfahren nach Anspruch 5, wobei das Monomergemisch 30 bis 45 Gew.-% eines Monomers auf Dienbasis und 55 bis 70 Gew.-% Alkylacrylat umfasst.

7. Verfahren nach Anspruch 5, wobei das Alkylacrylat Alkylacrylat mit 1 bis 10 Kohlenstoffatomen ist.

8. Verfahren nach Anspruch 5, wobei das Monomer auf Methacrylatbasis Alkylmethacrylat mit 1 bis 10 Kohlenstoffatomen ist.

9. Verfahren nach Anspruch 5, wobei das Monomergemisch unter Verwendung eines Vernetzungsmittels und eines Molekulargewichtssteuermittels polymerisiert wird.

10. Verfahren nach Anspruch 9, wobei das Vernetzungsmittel Triallylisocyanurat, Allylmethacrylat oder ein Gemisch davon ist und in einer Menge von 0,5 bis 1 Gewichtsteil pro 100 Gewichtsteile des Monomergemischs verwendet wird.

11. Verfahren nach Anspruch 5, wobei das Antioxidationsmittel Octadecyl-3-(3,5-di-tert-butyl-4-hydroxyphenyl)propionat oder Triethylenglycolbis-3(3-tert-butyl-4-hydroxy-5-methylphenyl)propionat, 2,6-Di-tert-butyl-methylphenol, 2,2'-Methylenbis(4-methyl-6-tert-butylphenol), Tri(2,4-di-tert-butylphenyl)phosphat, 1,3,5-Tri(2,5-di-tert-butyl-4-hydroxyphenyl)isocyanat, Distearylthiodipropionat, Laurylthiopropionatmethan, Diphenylisooctylphosphit oder Gemische davon ist und in einer Menge von 0,1 bis 1 Gewichtsteil pro 100 Gewichtsteile des Monomergemischs verwendet wird.

12. Verfahren nach Anspruch 5, wobei das Monomer auf Methacrylatbasis eingebracht wird, wenn das Umwandlungsverhältnis des Kautschukpolymers 70 bis 98% beträgt.

13. Harzzusammensetzung auf Methacrylatbasis, umfassend den Schlagmodifikator nach einem der Ansprüche 1-4.

14. Harzzusammensetzung auf Methacrylatbasis nach Anspruch 13, wobei die Harzzusammensetzung auf Methacrylatbasis 55 bis 95 Gew.-% eines Harzes auf Methacrylatbasis und 5 bis 45 Gew.-% eines Schlagmodifikators umfasst.

15. Formgegenstand, hergestellt aus einer Harzzusammensetzung nach Anspruch 14 mit einer Izod-Kerbschlagzähigkeit von 4,5 kgf·cm/cm oder mehr bei einer Dicke von ¼" nach ASTM D256, einem Gelbindex von 1,7 oder weniger nach ASTM D1925, einer Bleistifthärte von 1H oder mehr bei einer Belastung von 500 g und einer Temperatur von 23˚C nach JIS K5401, einer Gesamtlichtdurchlässigkeit von 92% oder mehr und einer Trübung von 0,9% oder weniger, jeweils gemessen durch einen von Suga Insturment Corporation hergestellten Farbcomputer.

**Revendications**

1. Modificateur de résistance aux chocs formé par polymérisation par greffage de 45 à 70% en masse d'un polymère élastomère avec 30 à 55% en masse d'un monomère à base de méthacrylate, dans lequel ledit polymère élastomère est préparé par polymérisation de 0,1 à 1 partie en masse d'un antioxydant avec 100 parties en masse d'un mélange de monomères comprenant de 30 à 45% en masse d'un monomère à base de diène et de 55 à 70% en masse d'acrylate d'alkyle.

2. Modificateur de résistance aux chocs selon la revendication 1, dans lequel ledit monomère à base de méthacrylate est un méthacrylate d'alkyle ayant de 1 à 10 atomes de carbone.

3. Modificateur de résistance aux chocs selon la revendication 1, dans lequel ledit acrylate d'alkyle est un acrylate d'alkyle ayant de 1 à 10 atomes de carbone.

4. Modificateur de résistance aux chocs selon la revendication 1, dans lequel ledit antioxydant est le 3-(3,5-di-tert-butyl-4-hydroxyphényl)propionate d'octadécyle, le propionate de triéthylèneglycol-bis-3-(3-tert-butyl-4-hydroxy-5-méthylphényle), le 2,6-di-tert-butyl-4-méthylphénol, le 2,2'-méthylène-bis-(4-méthyl-6-tert-butylphénol), le tri-(2,4-di-tert-butylphényl)phosphate, l'isocyanate de 1,3,5-tri(3,5-di-tert-butyl-4-hydroxyphényle), le thiodipropionate de distéaryle, le laurylthiopropionate-méthane, le diphényl-isooctyl-phosphite, ou des mélanges de ceux-ci.

5. Procédé pour préparer un modificateur de résistance aux chocs comprenant :

   la polymérisation d'un mélange de monomères comprenant un monomère à base de diène et un acrylate d'alkyle en présence d'un antioxydant pour préparer un polymère élastomère ayant un diamètre de particule de 150 à 250 nm ; et
   l'ajout d'un monomère à base de méthacrylate dans le polymère élastomère pour polymériser par greffage le monomère à base de méthacrylate avec le polymère élastomère.

6. Procédé selon la revendication 5, dans lequel ledit mélange de monomères comprenant de 30 à 45% en masse d'un monomère à base de diène et de 55 à 70% en masse d'acrylate d'alkyle.

7. Procédé selon la revendication 5, dans lequel ledit acrylate d'alkyle est un acrylate d'alkyle ayant de 1 à 10 atomes de carbone.

8. Procédé selon la revendication 5, dans lequel ledit monomère à base de méthacrylate est un méthacrylate d'alkyle ayant de 1 à 10 atomes de carbone.

9. Procédé selon la revendication 5, dans lequel ledit mélange de monomères est polymérisé en utilisant un agent de réticulation et un agent de contrôle de la masse moléculaire.

10. Procédé selon la revendication 9, dans lequel ledit agent de réticulation est l'isocyanurate de triallyle, le méthacrylate d'allyle, ou un mélange de ceux-ci et est utilisé en une quantité de 0,5 à 1 partie en masse, pour 100 parties en masse du mélange de monomères.

11. Procédé selon la revendication 5, dans lequel ledit antioxydant est le 3-(3,5-di-tert-butyl-4-hydroxyphényl)propionate d'octadécyle ou le propionate de triéthylèneglycol-bis-3-(3-tert-butyl-4-hydroxy-5-méthylphényle), le 2,6-di-tert-butyl-4-méthylphénol, le 2,2'-méthylène-bis-(4-méthyl-6-tert-butylphénol), le tri-(2,4-di-tert-butylphényl)phosphate, l'isocyanate de 1,3,5-tri(3,5-di-tert-butyl-4-hydroxyphényle), le thiodipropionate de distéaryle, le laurylthiopropionate-méthane, le diphényl-isooctyl-phosphite, ou des mélanges de ceux-ci et est utilisé en une quantité de 0,1 à 1 partie en masse, pour 100 parties en masse du mélange de monomères.

12. Procédé selon la revendication 5, dans lequel ledit monomère à base de méthacrylate est introduit lorsqu'un rapport de conversion du polymère élastomère est de 70 à 98%.

13. Composition de résine à base de méthacrylate comprenant le modificateur d'impact tel que défini dans l'une quelconque des revendications 1 à 4.

14. Composition de résine à base de méthacrylate selon la revendication 13, ladite composition de résine à base de méthacrylate comprenant de 55 à 95% en masse d'une résine à base de méthacrylate et de 5 à 45% en masse d'un modificateur de résistance aux chocs.

15. Article moulé produit à partir de la composition de résine selon la revendication 14 ayant une résistance aux chocs Izod entaillé de 4,5 kgf.cm/cm ou plus à une épaisseur de 1/4" selon l'ASTM D256, un indice de jaune de 1,7 ou moins selon l'ASTM D1925, une dureté au stylet de 1H ou plus à une charge de 500 g et une température de 23°C selon JTS K5401, une transmittance optique totale de 92% ou plus et un trouble de 0,9% ou moins respectivement mesurés par un calculateur de couleur fabriqué par Suga Instrument Corporation.